# DEMANDE DE BREVET EUROPEEN

(11) **EP 3 168 982 A1**
(43) Date de publication de la demande: **17.05.2017**
(21) Numéro de dépôt: 15194536.7
(22) Date de dépôt: 13.11.2015
(51) Int. Cl.: H02S 20/23, H02S 20/26

(54) **SYSTÈME MULTI-COUCHES SOUPLE**

(71) Demandeur: S.A. Imperbel N.V., 1651 Lot (BE)
(72) Inventeur: VERDEBOUT, Renaud, 5030 Gembloux (BE); COGNEAU, Patrick, 1457 Tourinnes-Saint-Lambert (BE); FRANSSEN, Damien, 5310 Mehaigne (BE); AERTS, Hans, 1731 Zellik (BE)
(74) Mandataire: Gevers Patents

(57) **Abrégé**

Système multi-couches (1) souple agencé pour être appliqué sur un support, en particulier une toiture, ledit système multi-couches (1) comprenant :
- un module photovoltaïque (3) flexible comprenant un élément photovoltaïque (4) ayant une surface supérieure (4a) et une surface inférieure (4b), une couche supérieure (5) et une couche inférieure (6), ledit élément photovoltaïque (4) étant disposé entre ladite couche supérieure (5) et ladite couche inférieure (6), ledit module photovoltaïque (3) présentant une largeur prédéterminée,
- une membrane d'étanchéité (7) présentant une première face (7a) et une deuxième face (7b) qui est agencée pour être appliquée sur ledit support, et
- une couche de liaison (8) disposée entre la couche inférieure (6) dudit module photovoltaïque (3) et ladite première face (7a) de ladite membrane d'étanchéité (7),
caractérisé en ce que ladite couche de liaison (8) présente une largeur supérieure à ladite largeur dudit module photovoltaïque (3).

## Description

La présente invention se rapporte à un système multi-couches souple agencé pour être appliqué sur un support, en particulier une toiture, ledit système comprenant :
- un module photovoltaïque flexible comprenant un élément photovoltaïque ayant une surface supérieure et une surface inférieure, une couche supérieure et une couche inférieure, ledit élément photovoltaïque étant disposé entre ladite couche supérieure et ladite couche inférieure, ledit module photovoltaïque présentant une largeur prédéterminée,
- une membrane d'étanchéité présentant une première face et une deuxième face qui est agencée pour être appliquée sur ledit support, et
- une couche de liaison disposée entre la couche inférieure dudit module photovoltaïque et ladite première face de ladite membrane d'étanchéité,

Un tel système est connu du document WO 2009/061 939 qui se rapporte à un élément de toiture qui comprend un élément photovoltaïque encapsulé, un substrat de toiture et une couche de liaison. L'élément photovoltaïque encapsulé présente une surface supérieure et une surface inférieure et est disposé entre une couche supérieure et une couche inférieure. La couche de liaison permet de relier l'élément photovoltaïque au substrat de toiture. Plus précisément, la couche de liaison permet une adhésion entre la couche inférieure de l'élément photovoltaïque encapsulé et la couche supérieure du substrat de toiture. La couche supérieure permet de protéger l'élément de toiture du milieu environnant.

Ce document divulgue que l'élément photovoltaïque est encapsulé de telle façon que l'encapsulant, la couche supérieure et la couche inférieure peuvent s'étendre latéralement de part et d'autre de l'élément photovoltaïque pour complètement l'encapsuler sur toute sa périphérie.

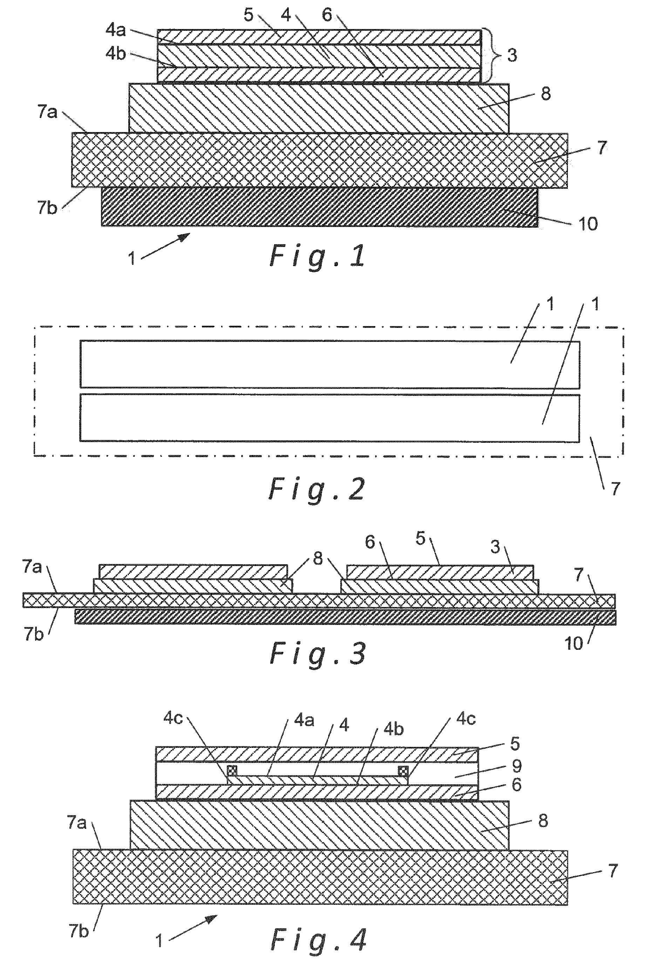

L'élément photovoltaïque, la couche supérieure et la couche inférieure forment ainsi un module photovoltaïque qui est prêt à être lié au substrat de toiture au moyen de la couche de liaison comme explicitement illustré aux figures 1 et 3 à 6.

Ce document renseigne également de la possibilité de recouvrir un toit d'une série d'éléments de toiture comme illustré ci-avant.

Malheureusement, l'adhérence entre les différentes couches formant l'élément de toiture ne peut pas être garantie au cours du temps. En effet, l'adhérence entre l'élément photovoltaïque encapsulé et le substrat de toiture au moyen de la couche de liaison diminue au cours du temps ce qui a pour conséquence que l'élément photovoltaïque encapsulé n'adhère plus suffisamment à l'ensemble de la structure rendant l'élément de toiture inefficace.

De plus, la durée de fabrication d'une série d'éléments de toiture est complexe, longue et couteuse.

Il existe donc un besoin de fournir un système multi-couches souple qui présente une durée de vie supérieure aux systèmes multi-couches connus et qui implique des coûts de fabrication moindres.

L'invention a pour but de pallier les inconvénients de l'état de la technique en procurant un système multi-couches dont les couches adhèrent suffisamment l'une à l'autre rendant le produit fiable au cours du temps et dont la fabrication est rendue aisée et moins couteuse.

Pour résoudre ce problème, il est prévu suivant l'invention, un système multi-couches tel qu'indiqué au début dans lequel ladite couche de liaison présente une largeur supérieure à ladite largeur dudit module photovoltaïque de sorte à s'étendre latéralement au-delà dudit module photovoltaïque.

De cette façon, la couche de liaison recouvre totalement la couche inférieure du module photovoltaïque et s'étend de part et d'autre de celui-ci. Cela permet de garantir une adhérence suffisante entre la couche inférieure du module photovoltaïque et la couche de liaison.

Ainsi, lors de la fabrication dudit système multi-couches, il est plus aisé et rapide d'aligner correctement ledit module photovoltaïque sur la couche de liaison. Cela a pour avantage de pouvoir automatiser le processus de fabrication. Il est ainsi possible de rapidement fabriquer une série de système multi-couches, par exemple au moyen d'un processus de laminage réalisé en continu tout en garantissant une facilité de fabrication. Cela permet d'obtenir un produit final fiable qui présente une durée de vie plus importante par rapport aux systèmes connus.

L'avantage de cette configuration structurelle permet de fournir un système multi-couches facile à fabriquer et dont l'adhérence entre le module photovoltaïque et la membrane d'étanchéité est garantie au cours du temps.

Avantageusement, une partie de ladite surface inférieure dudit élément photovoltaïque est en contact avec la couche inférieure dudit module photovoltaïque. Cela permet d'avoir un module photovoltaïque qui présente une épaisseur moindre ce qui a un impact direct sur l'épaisseur totale du système selon la présente invention.

Le fait qu'une partie de la couche inférieure du module photovoltaïque est directement en contact avec la surface inférieure dudit élément photovoltaïque permet également et de manière surprenante d'augmenter l'adhérence entre l'élément photovoltaïque et la couche inférieure ce qui est particulièrement avantageux dans le cadre de la présente invention.

Plus avantageusement, ledit élément photovoltaïque est pré-encapsulé au moyen d'un encapsulant pour protéger l'élément photovoltaïque qui peut être relativement sensible au milieu environnant. Il est donc avantageux de pouvoir le protéger à l'aide d'un encapsulant.

Dans une forme de réalisation particulière, l'élément photovoltaïque comprend un encapsulant disposé entre ladite couche supérieure dudit module photovoltaïque et la surface supérieure dudit élément photovoltaïque. Cela permet de protéger la partie de l'élément photovoltaïque qui est orientée en direction des rayons du soleil.

De préférence, ledit élément photovoltaïque présente des bords latéraux sur lesquels est également présent ledit encapsulant ce qui permet de protéger ledit élément photovoltaïque au niveau de ses bords latéraux.

Dans une forme de réalisation particulièrement avantageuse du dispositif selon l'invention, ladite membrane d'étanchéité est choisie dans le groupe constitué d'une membrane à base de bitume, d'une membrane en polymère, d'une membrane végétale ou d'une membrane synthétique. L'intégration dudit module photovoltaïque selon l'invention à une membrane d'étanchéité selon l'invention est particulièrement avantageuse étant donné qu'elle permet de fournir un produit multifonctionnel. En effet, le produit final est suffisamment étanche pour recouvrir efficacement une toiture et permet d'absorber les rayons lumineux pour les convertir en signaux électriques.

De plus, dans une forme de réalisation particulière, ladite membrane d'étanchéité est munie d'une armature en une matière choisie dans le groupe constitué du polyester, du voile de verre ou de leur mélange, ce qui permet de renforcer la membrane et ainsi augmenter encore sa durée de vie au cours du temps.

L'armature peut avantageusement consister en une matrice en verre.

De manière avantageuse, ladite couche supérieure dudit module photovoltaïque présente une épaisseur comprise entre 50 et 500 µm, de préférence entre 50 et 300 µm, plus préférentiellement entre 50 et 200 µm, avantageusement entre 50 et 100 µm.

Avantageusement, ladite couche inférieure dudit module photovoltaïque présente une épaisseur comprise entre 50 et 200 µm, de préférence entre 50 et 150 µm, plus préférentiellement entre 100 et 130 µm.

Selon un mode préféré, ledit élément photovoltaïque présente une épaisseur comprise entre 1 et 200 µm, de préférence entre 1 et 100 µm, plus préférentiellement entre 1 et 5 µm.

De manière préférentielle, l'élément photovoltaïque est flexible ce qui lui permet d'épouser plusieurs types de forme.

De manière avantageuse, ladite couche de liaison présente une épaisseur comprise entre 50 et 500 µm, de préférence entre 150 et 300 µm, plus préférentiellement entre 150 et 250 µm, plus préférentiellement encore entre 100 et 230 µm.

Préférentiellement, ladite membrane d'étanchéité présente une épaisseur comprise entre 0,5 et 5 mm, de préférence 0,5 et 2,5 mm, plus préférentiellement entre 0,5 et 2 mm, plus préférentiellement encore entre 0,5 et 1,7 mm, avantageusement entre 1 et 1,6 mm.

Plus préférentiellement, ladite couche de liaison présente une adhérence supérieure à 40 N/50 mm, de préférence supérieure à 50 N/50 mm, mesurée selon la norme EN 12316-1.

De manière surprenante, il a été constaté que la couche de liaison selon la présente invention présente une adhérence au moins supérieure à 40 N/50 mm ce qui permet d'obtenir une adhérence avantageuse entre la couche inférieure du module photovoltaïque et la face supérieure de la membrane d'étanchéité. La couche de liaison de la présente invention permet ainsi d'intégrer aisément et avec fiabilité le module photovoltaïque à la membrane d'étanchéité.

Selon un mode particulièrement avantageux du système selon l'invention, ladite couche de liaison comprend de l'éthylène-acétate de vinyle (EVA), contenant préférentiellement au moins 20 % d'acétate de vinyle (AV), plus préférentiellement au moins 33% de VA, avantageusement une quantité égale à 33 % de VA.

De manière particulièrement avantageuse, la couche de liaison est constituée d'EVA et présente une adhérence supérieure à 40 N/50 mm, de préférence supérieure à 50 N/50 mm, mesurée selon la norme EN 1231-1.

Il a été constaté que l'utilisation d'une telle couche de liaison renforce encore l'adhérence entre, d'une part, la couche inférieure du module photovoltaïque et la couche de liaison et, d'autre part, entre la face supérieure de la membrane d'étanchéité et la couche de liaison. Le produit final présente alors une durée de vie plus longue par rapport à des systèmes connus.

De préférence, ladite couche inférieure dudit module photovoltaïque est faite en une matière choisie dans le groupe constitué des polyesters, des polyoléfines, du fluoropolymère ou de leur mélange.

Le fluoropolymère est préférentiellement choisi dans le groupe constitué du poly(éthylène-co-tétrafluoroéthyléne (ETFE), du perfluoroalkoxy (PFA), de l'éthylène propylène fluoré (FEP), du poly(fluorure de vinylidène) (PVDF) ou du poly(fluorure de vinyle) (PVF ou « TEDLAR »).

Les polyesters peuvent être choisis dans le groupe constitué du poly(téréphtalate d'éthylène) (PET) ou du Poly(naphtalate d'éthylène) (PEN). Le PEN sera particulièrement préféré.

Les polyoléfines peuvent être choisis dans le groupe constitué du polyéthylène.

Selon un mode avantageux, ladite membrane d'étanchéité présente une largeur supérieure à celle de ladite couche de liaison. Cela permet d'ajouter plusieurs modules photovoltaïques sur la membrane en ajoutant respectivement les couches de liaisons afin d'obtenir le système selon la présente invention. Il est ainsi possible d'intégrer plusieurs modules photovoltaïques à une seule membrane d'étanchéité ce qui est facilite la fabrication du système selon l'invention. De plus, le processus de fabrication peut être automatisé ce qui réduit le temps de fabrication d'un tel système.

Plus avantageusement encore, ladite membrane d'étanchéité présente une longueur supérieure à la longueur de ladite couche de liaison.

Ainsi, le module photovoltaïque et la couche de liaison reposent de manière fixe sur la membrane d'étanchéité.

Cela permet de fixer le système multi-couches sur tout type de support, comme un toit ou un toit qui présente une surface rugueuse.

L'avantage du système selon l'invention est qu'il est capable d'épouser tout type de surface de préférence rugueuse, en pente grâce aux propriétés des éléments qui le constituent.

D'autres formes de réalisation du système suivant l'invention sont indiquées dans les revendications annexées.

L'invention a aussi pour objet une toiture qui comprend le système multi-couches selon la présente invention.

D'autres formes de réalisation du procédé, dispositif suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue d'un mode de réalisation du système multi-couches selon l'invention.
La figure 2 est une vue d'en haut d'un système multi-couches selon l'invention comprenant une membrane d'étanchéité et deux modules photovoltaïques.
La figure 3 est une vue en coupe du système multi-couches illustré à la figure 2.
La figure 4 est une vue schématique d'une variante du système multi-couches selon l'invention.

Sur les figures, les éléments identiques ou analogues portent les mêmes références.

Dans le cadre de la présente invention, la fabrication du système multi-couches selon la présente invention comprend les étapes suivantes :
- mise à disposition d'une membrane d'étanchéité qui présente une surface supérieure,
- application d'une couche de liaison sur la surface supérieure de la membrane d'étanchéité,
- application d'un module photovoltaïque, qui comprend une couche supérieure, une couche inférieure et un élément photovoltaïque, sur la couche de liaison pour obtenir une structure multi-couches pré-assemblée,
- introduction de la structure multi-couches pré-assemblée dans une lamineuse pour joindre les couches les unes aux autres après le passage du système dans un four présentant un programme de température prédéfini.

La fabrication du système multi-couches peut être réalisée dans une lamineuse statique ou qui fonctionne en continu. La construction du multi-couches selon un processus en continu est tout à fait réalisable et même facilitée grâce à l'agencement des couches les unes par rapport aux autres. Par conséquent, le temps de fabrication du système multi-couches peut considérablement être réduit. De plus, le produit obtenu est fiable au cours du temps car les couches adhèrent suffisamment les unes aux autres.

Le programme de température prédéfini consiste en un programme de chauffe qui permet d'obtenir un processus de laminage suffisant pour pouvoir joindre les couches du systèmes les unes aux autres. L'application de ce programme de température est amplement connu de l'homme de métier.

La lamineuse peut être avantageusement être parmi la gamme KFK fournie par la société Meyer (Maschinenfabrik Herbert Meyer GmbH), en particulier les dispositifs dénommés KFK-V, KFK-X, KFK-E.

Dans le cadre de la présente invention, il est utilisé un module photovoltaïque flexible qui comprend une couche supérieure, une couche inférieure et un élément photovoltaïque.

La couche supérieure du module photovoltaïque est collée au moyen d'une colle bi-composante sur l'élément photovoltaïque et la couche inférieure du module photovoltaïque est quant à elle greffée chimiquement sur l'élément photovoltaïque par technique plasma.

Ainsi, l'assemblage de ces couches permet de former le module photovoltaïque selon la présente invention.

L'élément photovoltaïque peut comprendre des connexions électriques, comme illustré à la figure 4 décrite ci-dessous.

L'élément photovoltaïque est préférentiellement fourni par la société Hyet Solar.

Comme expliqué, l'élément photovoltaïque peut être pré-encapsulé au moyen d'un encapsulant prévu à cet effet.

Un tel encapsulant peut être choisi dans le groupe constitué de l'EVA, de l'EVA fonctionnalisé, de l'EVA réticulé, du silicone, des PU thermoplastiques, des polyoléfines modifiées à l'acide maléique, d'ionomères ou de copolymère d'éthylène/ d'acide méta(acrylique).

L'encapsulant peut être disposé entre la surface supérieure de l'élément photovoltaïque et la couche supérieure du module photovoltaïque.

De manière avantageuse, l'encapsulant peut également s'étendre jusqu'aux bords latéraux de l'élément photovoltaïque ou au-delà desdits bords latéraux.

Ladite couche supérieure dudit module photovoltaïque présente une épaisseur comprise entre 50 et 500 µm, de préférence entre 50 et 300 µm, plus préférentiellement entre 50 et 200, plus préférentiellement encore entre 50 et 200, avantageusement entre 50 et 100 µm.

Avantageusement, ladite couche inférieure dudit module photovoltaïque présente une épaisseur comprise entre 50 et 200 µm, de préférence entre 50 et 150 µm, plus préférentiellement entre 80 et 130 µm.

De préférence, ladite couche inférieure dudit module photovoltaïque est faite en une matière choisie dans le groupe constitué des polyesters, des polyoléfines, du fluoropolymère ou de leur mélange.

Le fluoropolymère est préférentiellement choisi dans le groupe constitué de l'ETFE, PFE, FEP, PVDF ou PVF (« TEDLAR »).

Les polyesters peuvent être choisis dans le groupe constitué du PET ou du PEN. Le PEN sera particulièrement préféré.

Les polyoléfines peuvent être choisis dans le groupe constitué du polyéthylène.

Selon un mode préféré, ledit élément photovoltaïque présente une épaisseur comprise entre 1 et 200 µm, de préférence entre 1 et 100 µm, plus préférentiellement entre 1 et 5 µm.

La couche de liaison présente de préférence une épaisseur comprise entre 50 et 500 µm, de préférence entre 150 et 300 µm, plus préférentiellement entre 150 et 250 µm, plus préférentiellement encore entre 100 et 200 µm. Elle peut avantageusement être égale à 200 µm.

De plus, ladite couche de liaison peut présenter une adhérence supérieure à 40 N/50 mm, de préférence supérieure à 50 N/50 mm, mesurée selon la norme EN 12316-1.

Ladite couche de liaison est choisie dans le groupe constitué de l'éthylène-acétate de vinyle (EVA), contenant préférentiellement au moins 20 % d'acétate de vinyle (AV), plus préférentiellement au moins 33% de VA, avantageusement une quantité égale à 33 % de VA.

De manière particulièrement avantageuse, la couche de liaison est constituée d'EVA et présente une adhérence supérieure à 40 N/50 mm, de préférence supérieure à 50 N/50 mm, mesurée selon la norme EN 1231-1.

L'EVA peut par exemple correspondre au produit commerical connu sous le nom de NovoVellum^{®} Optima FC03(http://www.enf.com.cn/ApolloF/solar/Product/pdf/EVA/5343906b3b9 a7.pdf), disponible auprès de la firme NovoPolymers NV.

La membrane d'étanchéité est choisie dans le groupe constitué d'une membrane à base de bitume, d'une membrane en polymère, d'une membrane végétale ou d'une membrane synthétique.

De préférence, la membrane bitumineuse est au sens de la présente invention une membrane qui comprend une armature qui présente au moins une face recouverte d'une composition bitumineuse.

La membrane bitumineuse est avantageusement un produit commercial qui peut être choisi parmi les produits commerciaux suivants : Derbibrite, Derbibrite NT, Derbibrite FM, Derbibrite SELFIX, Derbipure, Aquatop, Derbigum ARTE, Derbigum SELFIX, Derbisolar BASE ou leur mélange. Ces produits étant fournis par l'entreprise Derbigum.

La membrane synthétique peut être sélectionnée parmi les produits commerciaux suivants : VAEPLAN V 1,2 mm, VAEPLAN V 1,5 mm, VAEPLAN V-FR 1,2 mm, VAEPLAN V-FR 1,5 mm, VAEPLAN U/GV 1,2 mm, VAEPLAN F 1,5 mm, VAEPLAN F 1,2 mm, VAEPLAN VS 1,2 mm, VAEPLAN VS 1,5mm, VAEPLAN ABS 1.2mm, VAEPLAN ABS 1.5mm. Ces produits étant fournis par l'entreprise Derbigum.

La membrane végétale peut être avantageusement sélectionnée parmi les produits commerciaux suivants : DERBIPURE disponible auprès de la firme Derbigum.

Selon un mode particulièrement avantageux, ladite membrane d'étanchéité est munie d'une armature en une matière choisie dans le groupe constitué du polyester, du voile de verre ou de leur mélange.

Plus préférentiellement, ladite membrane d'étanchéité présente une épaisseur comprise entre 0,5 et 5 mm, de préférence 0,5 et 2,5 mm, plus préférentiellement entre 0,5 et 2 mm, plus préférentiellement encore entre 0,5 et 1,7 mm, avantageusement entre 1 et 1,6 mm.

Selon un mode préférentiel, une partie de ladite surface inférieure 4b dudit élément photovoltaïque 4 est en contact avec la couche inférieure 6 dudit module photovoltaïque 3.

Avantageusement encore, ladite membrane d'étanchéité présente une largeur supérieure à celle de ladite couche de liaison.

Plus avantageusement encore, ladite membrane d'étanchéité présente une longueur supérieure à la longueur de ladite couche de liaison.

La présente invention se rapporte également à une toiture qui comprend le système multi-couches selon l'une quelconque des revendications précédentes.

La toiture peut certainement comprendre une pluralité de système multi-couches selon la présente invention.

La figure 1 illustre un mode de réalisation du système multi-couches selon l'invention. Le système multi-couches 1 souple comprend de manière successive un module photovoltaïque 3, une couche de liaison 8 et une membrane d'étanchéité 7 munie sur sa face inférieure 7b d'une armature 10.

Le module photovoltaïque 3 est flexible et comprend un élément photovoltaïque 4, une couche supérieure 5 et une couche inférieure 6. Ledit module photovoltaïque 3 présente une largeur prédéterminée.

L'élément photovoltaïque 4 présente une surface supérieure 4a et une surface inférieure 4b et est disposé entre ladite couche supérieure 5 du module photovoltaïque 3 et ladite couche inférieure 6 dudit module photovoltaïque 3.

La membrane d'étanchéité 7 présente une première face 7a et une deuxième face 7b qui est agencée pour être appliquée sur un support, tel un toit.

La couche de liaison 8 est disposée entre la couche inférieure 6 dudit module photovoltaïque 3 et ladite première face 7a de ladite membrane d'étanchéité 7, et présente une largeur supérieure à ladite largeur dudit module photovoltaïque 3 de sorte à s'étendre latéralement au-delà dudit module photovoltaïque 3, comme illustré à la figure 1.

La surface inférieure 4b dudit élément photovoltaïque 4 est en contact avec la couche inférieure 6 dudit module photovoltaïque 3.

De manière préférée, ledit élément photovoltaïque 4 est pré-encapsulé au moyen d'un encapsulant 9 choisi dans le groupe constitué des colles réactives bi-composants comme par exemple des colles époxydes, des colles acryliques ou des colles à base de polyuréthane.

Ladite membrane d'étanchéité 7 est avantageusement choisie dans le groupe constitué d'une membrane à base de bitume, d'une membrane en polymère, d'une membrane végétale ou d'une membrane synthétique.

L'armature 10 de la membrane d'étanchéité 7 est faite en matière choisie dans le groupe constitué du polyester, du voile de verre, d'une grille de verre ou de leur combinaison.

Selon ce mode de réalisation, la couche de liaison 8 présente une épaisseur de 200 µm, l'élément photovoltaïque présente une épaisseur de 130 µm et la membrane d'étanchéité présente une épaisseur de 1,5 mm.

La couche de liaison 8 présente également une adhérence supérieure à 40 N/50 mm, mesurée selon la norme EN 12316-1 et est faite en éthylène-acétate de vinyle (EVA).

La couche inférieure 6 du module photovoltaïque 3 comprend ou est constitué de PEN.

Selon ce mode avantageux, ladite membrane d'étanchéité 7 présente une largeur supérieure à celle de ladite couche de liaison 8 et de *facto* du module photovoltaïque 3.

Ainsi, le système multi-couches représenté à la figure 1 peut être posé de manière fixe sur une toiture d'une habitation.

De manière plus avantageuse, une série de système multi-couches selon la présente invention et disposés les uns à côté des autres peuvent recouvrir la surface d'un toit.

La figure 2 illustre une vue d'en haut d'un système multi-couches selon l'invention comprenant une membrane d'étanchéité et deux modules photovoltaïques.

Dans cet exemple de réalisation du système suivant l'invention, ladite membrane d'étanchéité 7 présente une longueur supérieure à la longueur de ladite couche de liaison 8 et une largeur supérieure à celle de ladite couche de liaison 8.

Il est ainsi possible d'avoir une pluralité de modules photovoltaïques qui est intégrée à une seule membrane d'étanchéité ce qui est particulièrement avantageux.

Il est également possible d'enrouler ce système multi-couches pour le vendre sous forme de rouleaux.

Une série de système multi-couches comme illustrés à la figure 2 peut également recouvrir la surface d'une toiture.

Grâce à la souplesse du système multi-couches selon la présente invention, le système est apte à adopter la forme de la surface sur laquelle il est posé, tout en permettant une manipulation aisée du système selon l'invention, en particulier lors de la pose.

De plus, le système fourni est particulièrement discret une fois qu'il est posé sur une toiture ce qui constitue un réel avantage par rapport aux systèmes connus.

La figure 3 est une vue en coupe du système multi-couches illustré à la figure 2. Ce système multi-couches comprend tous les éléments qui ont été décrits pour le système multi-couches illustré à la figure 1.

La figure 4 représente une variante du système multi-couches selon l'invention.

Ce système multi-couches comprend tous les éléments illustrés pour le système multi-couches illustré à la figure 1, excepté que la membrane 7 est dépourvue d'une armature 10 et que le module photovoltaïque est pré-encapsulé au moyen d'un encapsulant 9.

Comme illustré, une partie de ladite surface inférieure 4b dudit élément photovoltaïque 4 est directement en contact avec la couche inférieure 6 dudit module photovoltaïque 3.

De plus, l'encapsulant 9 est disposé entre ladite couche supérieure 5 dudit module photovoltaïque 3 et la surface supérieure 4a dudit élément photovoltaïque 4 et s'étend jusqu'aux bords latéraux 4c de l'élément photovoltaïque 4.

Selon ce mode de réalisation le système multi-couches ainsi obtenu est plus compact ce qui permet de recouvrir un support comme une toiture de manière discrète et fiable.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système multi-couches (1) souple agencé pour être appliqué sur un support, en particulier une toiture, ledit système multi-couches (1) comprenant :
- un module photovoltaïque (3) flexible comprenant un élément photovoltaïque (4) ayant une surface supérieure (4a) et une surface inférieure (4b), une couche supérieure (5) et une couche inférieure (6), ledit élément photovoltaïque (4) étant disposé entre ladite couche supérieure (5) et ladite couche inférieure (6), ledit module photovoltaïque (3) présentant une largeur prédéterminée,
- une membrane d'étanchéité (7) présentant une première face (7a) et une deuxième face (7b) qui est agencée pour être appliquée sur ledit support, et
- une couche de liaison (8) disposée entre la couche inférieure (6) dudit module photovoltaïque (3) et ladite première face (7a) de ladite membrane d'étanchéité (7),
**caractérisé en ce que** ladite couche de liaison (8) présente une largeur supérieure à ladite largeur dudit module photovoltaïque (3) de sorte à s'étendre latéralement au-delà dudit module photovoltaïque (3).

2. Système multi-couches (1) selon la revendication 1, dans lequel une partie de ladite surface inférieure (4b) dudit élément photovoltaïque (4) est en contact avec la couche inférieure (6) dudit module photovoltaïque (3).

3. Système multi-couches (1) selon la revendication 1 ou 2, dans lequel ledit élément photovoltaïque (4) est pré-encapsulé au moyen d'un encapsulant (9).

4. Système multi-couches (1) selon la revendication 1 ou 2, dans lequel l'élément photovoltaïque (4) comprend un encapsulant (9) disposé entre ladite couche supérieure (5) dudit module photovoltaïque (3) et la surface supérieure (4a) dudit élément photovoltaïque (4).

5. Système multi-couches (1) selon la revendication 4, dans lequel l'élément photovoltaïque (4) présente des bords latéraux (4c) sur lesquels est présent ledit encapsulant (9).

6. Système multi-couches (1) selon l'une quelconque des revendications précédentes, dans lequel ladite membrane d'étanchéité (7) est choisie dans le groupe constitué d'une membrane à base de bitume, d'une membrane en polymère, d'une membrane végétale ou d'une membrane synthétique.

7. Système multi-couches (1) selon l'une quelconque des revendications précédentes, dans lequel ladite membrane d'étanchéité (7) est munie d'une armature (10) en une matière choisie dans le groupe constitué du polyester, du voile de verre ou de leur mélange.

8. Système multi-couches (1) selon l'une quelconque des revendications précédentes, dans lequel ledit élément photovoltaïque (4) présente une épaisseur comprise entre 1 et 200 µm, de préférence entre 1 et 100 µm, plus préférentiellement entre 1 et 5 µm.

9. Système multi-couches (1) selon l'une quelconque des revendications précédentes dans lequel ladite couche de liaison (8) présente une épaisseur comprise entre 50 et 500 µm, de préférence entre 150 et 300 µm, plus préférentiellement entre 150 et 250 µm, plus préférentiellement encore entre 100 et 200 µm.

10. Système multi-couches (1) selon l'une quelconque des revendications précédentes, dans lequel ladite membrane d'étanchéité (7) présente une épaisseur comprise entre 0,5 et 5 mm, de préférence 0,5 et 2,5 mm, plus préférentiellement entre 0,5 et 2 mm, plus préférentiellement encore entre 0,5 et 1,7 mm, avantageusement entre 1 et 1,6 mm.

11. Système multi-couches (1) selon l'une quelconque des revendications précédentes, dans lequel ladite couche de liaison (8) présente une adhérence supérieure à 40 N/50 mm, de préférence supérieure à 50 N/50 mm, mesurée selon la norme EN 12316-1.

12. Système multi-couches (1) selon l'une quelconque des revendications précédentes, dans lequel ladite couche de liaison (8) comprend de l'éthylène-acétate de vinyle (EVA).

13. Système multi-couches (1) selon la revendication 12, dans lequel la couche de liaison est constituée d'EVA et présente une adhérence supérieure à 40 N/50 mm, de préférence supérieure à 50 N/50 mm, mesurée selon la norme EN 1231-1.

14. Système multi-couches (1) selon l'une quelconque des revendications précédentes, dans lequel ladite couche inférieure (6) dudit module photovoltaïque (3) est faite en matière choisie dans le groupe constitué des polyesters, des polyoléfines, du fluoropolymère ou de leur mélange.

15. Système multi-couches (1) selon l'une quelconque des revendications précédentes, dans lequel ladite membrane d'étanchéité (7) présente une largeur supérieure à celle de ladite couche de liaison (8).

16. Système multi-couches (1) selon la revendication 17, dans lequel ladite membrane d'étanchéité (7) présente une longueur supérieure à la longueur de ladite couche de liaison (8).

17. Toiture comprenant le système multi-couches (1) selon l'une quelconque des revendications précédentes.
